# EUROPÄISCHE PATENTSCHRIFT

(11) **EP 3 120 201 B1**
(45) Veröffentlichungstag und Bekanntmachung des Hinweises auf die Patenterteilung: **29.11.2017**
(21) Anmeldenummer: 15700671.9
(22) Anmeldetag: 15.01.2015
(51) Int. Cl.: G05B 19/042

(54) **VERFAHREN UND VORRICHTUNG ZUR DRUCKREGELUNG IN EINEM VERSORGUNGSNETZ**
METHOD AND DEVICE FOR PRESSURE CONTROL IN A SUPPLY NETWORK
PROCÉDÉ ET DISPOSITIF DE RÉGULATION DE LA PRESSION DANS UN RÉSEAU DE DISTRIBUTION D'UN FLUIDE

(30) Priorität: 21.03.2014 DE 102014205332
(43) Veröffentlichungstag der Anmeldung: 25.01.2017
(73) Patentinhaber: Siemens Aktiengesellschaft, 80333 München (DE)
(72) Erfinder: ALLMARAS, Moritz, 81673 München (DE); WEHRSTEDT, Jan Christoph, 81829 München (DE); WEVER, Utz, 81539 München (DE)
(86) Internationale Anmeldenummer: PCT/EP2015/050668
(87) Internationale Veröffentlichungsnummer: WO 2015/139853

(56) Entgegenhaltungen:
- EP-A1- 0 574 241
- DE-A1-102011 078 240
- US-A1- 2013 085 619
- WILLCOX ET AL: "Unsteady flow sensing and estimation via the gappy proper orthogonal decomposition", COMPUTERS AND FLUIDS, PERGAMON PRESS, NEW YORK, NY, GB, Bd. 35, Nr. 2, 1. Februar 2006 (2006-02-01), Seiten 208-226, XP027991441, ISSN: 0045-7930 [gefunden am 2006-02-01]

## Beschreibung

Die vorliegende Erfindung betrifft ein Verfahren zur Druckregelung in einem Versorgungsnetz für eine Versorgung von Verbrauchern mit einem Medium. Des Weiteren betrifft die vorliegende Erfindung eine Vorrichtung zur Druckregelung in einem Versorgungsnetz sowie ein Versorgungsnetz.

Obwohl die vorliegende Erfindung nachfolgend mit Bezug auf Wasserversorgungsnetze beschrieben wird, ist sie genauso auf andere Versorgungsnetze, beispielsweise Gasnetze oder Fernwärmenetze, anwendbar.

Der in einem Wasserversorgungsnetz herrschende hydraulische Druck ist ein wichtiges Qualitätsmerkmal. Für industrielle Großverbraucher und Feuerhydranten garantiert ein hoher Druck, dass eine große Wassermenge in kurzer Zeit aus dem Versorgungsnetz entnommen werden kann. An den Hausanschlüssen erlaubt ein ausreichend hoher Wasserdruck komplette Gebäude bis zur obersten Etage ohne zusätzliche Pumpeinrichtungen zuverlässig mit Trinkwasser zu versorgen.

Auf der anderen Seite führt ein zu hoher Druck im Versorgungsnetz zu vorzeitiger Alterung und Versagen von Komponenten, beispielsweise durch Rohrleitungsbruch. Die dadurch verursachten Leckagen führen zu hohen Reparaturkosten, Wasserverlusten und in einigen Fällen zu weiteren Schäden an umliegenden Strukturen. Des Weiteren führt ein Überdruck zu einem erhöhten Wasserverlust durch Hintergrundleckagen. Solche Hintergrundleckagen sind in jedem Wassernetz in gewissem Ausmaß vorhanden und haben einen kontinuierlichen Verlust von Trinkwasser zur Folge. Ein zu hoher Fließdruck erhöht außerdem die bei der Rohrströmung auftretenden Reibungsverluste. In Versorgungsnetzen, in denen der Druck durch Pumpen aufgebaut wird, führt eine Erhöhung des bereitgestellten Drucks unmittelbar zu einem erhöhten Energiebedarf der Pumpen.

Betreiber von Versorgungsnetzen stehen daher vor der Herausforderung, zwischen diesen beiden entgegenlaufenden Anforderungen einen Kompromiss bezüglich des bereitgestellten hydraulischen Drucks in dem Versorgungsnetz zu finden. Diese Entscheidung wird zusätzlich dadurch erschwert, dass der im Betrieb herrschende Druck stark durch die Abnahmelast beeinflusst wird, die starken Schwankungen ausgesetzt sein und oft nicht zuverlässig gemessen oder vorhergesagt werden kann. Diese Abnahmeschwankungen sowie Schaltvorgänge von Pumpen und Ventilen können weiterhin zu kurzzeitigen Druckspitzen im Versorgungsnetz führen, die eine schädliche Wirkung auf Netzkomponenten haben können und häufig die Ursache von plötzlich auftretenden Leckagen darstellen.

In vielen Wasserversorgungsnetzen wird heutzutage durch Hochbehälter oder ständig laufende Pumpen gezielt ein kontinuierlich hoher Druck bereitgestellt. Die Auslegung der Netzkomponenten wird schon bei der Planung bewusst überdimensioniert. Der Überdruck im Versorgungsnetz wird an den Verbrauchsstellen durch Druckreduzierungseinrichtungen auf ein für die Verbraucher sinnvolles Maß reduziert. Die durch den langfristigen Betrieb mit hohem Druck vorstehend aufgeführten Nachteile werden vielfach in Kauf genommen.

Erst in der jüngeren Vergangenheit wurden unter dem Schlagwort Pressure Management [TL] Ansätze entwickelt, um den im Wasserverteilnetz herrschenden Druck gezielt an die Anforderungen der Verbraucher anzupassen und damit zu hohe Drücke samt den damit einhergehenden Nachteilen zu vermeiden. Zu den dabei entwickelten Techniken gehört die Unterteilung des Versorgungsnetzes in Druckzonen (pressure management zones, PMZ), in denen der Druck an den Zuflüssen durch gezielte Steuerung von Ventilen oder Pumpen auf ein Mindestmaß reduziert wird. Zur Auslegung der Drucksteuerung werden dabei Kenntnisse über die Netzstruktur, die topographischen Gegebenheiten der Druckzone sowie über Anzahl und Art der angeschlossenen Verbraucher herangezogen. Um auf die durch wechselnden Verbrauch verursachten dynamischen Druckschwankungen reagieren zu können, werden inzwischen auch Online gemessene Druckwerte in der Zone für die Drucksteuerung verwendet [UBRR].

Das Dokument EP 0 574 241 A1 beschäftigt sich mit einer Vorrichtung zum Steuern eines Drucks einer Versorgungsflüssigkeit in Verbindung mit einem Ventil zur Drucksteuerung eines Versorgungsflüssigkeitsssystems.

Vor diesem Hintergrund besteht eine Aufgabe der vorliegenden Erfindung darin, ein verbessertes Verfahren zur Druckregelung in einem Versorgungsnetz bereitzustellen. Des Weiteren soll eine verbesserte Vorrichtung zur Druckregelung in einem Versorgungsnetz sowie ein verbessertes Versorgungsnetz bereitgestellt werden.

Die Aufgabe wird durch die Merkmale der unabhängigen Ansprüche gelöst. Vorteilhafte Weiterbildungen sind den abhängigen Ansprüchen zu entnehmen.

Demgemäß wird ein Verfahren zur Druckregelung im Versorgungsnetz für eine Versorgung von Verbrauchern mit einem Medium bereitgestellt. Das Versorgungsnetz weist zumindest eine Pumpe zum Pumpen des Mediums und/oder zumindest ein Ventil zum Steuern eines Mediumflusses auf. Das Verfahren umfasst die folgenden Schritte: a) Bestimmen von zumindest einem Verbrauchsprofil für einen jeweiligen Verbraucher, b) Bestimmen von Druck- und/oder Durchflussprofile in dem Versorgungsnetz beschreibenden Daten basierend auf den Verbrauchsprofilen, c) Reduzieren der Daten in reduzierte Daten, d) Erfassen von zumindest einem ersten Druck- und/oder Durchflusswert an zumindest einer ersten Stelle in dem Versorgungsnetz, e) Rekonstruieren von zumindest einem zweiten Druck- und/oder Durchflusswert an zumindest einer zweiten Stelle in dem Versorgungsnetz aus den reduzierten Daten mittels des zumindest einen ersten Druck- und/oder Durchflusswerts, und f) Ansteuern der zumindest einen Pumpe und/oder des zumindest einen Ventils basierend auf dem zumindest einen ersten Druck- und/oder Durchflusswert und dem zumindest einen zweiten Druck-und/oder Durchflusswert.

Mit anderen Worten wird also ein Simulationsmodell des Versorgungsnetzes erstellt. Das Simulationsmodell simuliert Druck- und/oder Durchflussprofile in Abhängigkeit von Verbrauchsprofilen. Die die Druck- und/oder Durchflussprofile beschreibenden Daten werden anschließend reduziert. All dies kann "offline" erfolgen, also außerhalb des eigentlichen Betriebs, insbesondere vor Inbetriebnahme des Versorgungsnetzes. In einem "online" Teil des Verfahrens, also im Betrieb des Versorgungsnetzes, wird nun mittels zumindest eines ersten Sensors ein erster Druck- und/oder Durchflusswert an zumindest einer ersten Stelle in dem Versorgungsnetz gemessen. Um nun jedoch auch einen zweiten Druck- und/oder Durchflusswert an zumindest einer zweiten Stelle in dem Versorgungsnetz zu bestimmen, wird dieser aus den reduzierten Daten und unter Verwendung des zumindest eines ersten Druck- und/oder Durchflusswerts rekonstruiert. Ganz allgemein weisen die reduzierten Daten weniger Daten und/oder eine geringere Datenkomplexität als die (nicht-reduzierten) Daten auf. Die Verwendung der reduzierten Daten zur Bestimmung der zweiten Druck-und/oder Durchflusswerte hat den Vorteil, dass weniger Rechenleistung benötigt und entsprechend eine schnelle Ansteuerung der zumindest einen Pumpe oder des zumindest einen Ventils, insbesondere in Echtzeit, ermöglicht wird. Unter "Rekonstruieren" ist zu verstehen, dass der zumindest eine zweite Druck- und/oder Durchflusswert in den (nicht-reduzierten) Daten enthalten oder annähernd enthalten war und auf Basis der reduzierten Daten unter Zuhilfenahme des zumindest einen ersten Druck- und/oder Durchflusswerts auf diesen zumindest einen zweiten Druck- und/oder Durchflusswert rückgerechnet wird.

Entsprechend können die jeweils aktuellen Druck- und/oder Durchflusswerte an jeder Stelle in dem Versorgungsnetz entweder direkt gemessen oder rekonstruiert werden und sind damit bekannt. Folglich kann auch die Ansteuerung der zumindest einen Pumpe und/oder des zumindest einen Ventils in Kenntnis der Zustände in dem gesamten Versorgungsnetz erfolgen. Die zumindest eine Pumpe und/oder das zumindest eine Ventil kann daher so angesteuert werden, dass der Druck an jeder Stelle in dem Versorgungsnetz einen vorgeschriebenen Sollwert (beispielsweise ein gesetzlich vorgeschriebener Mindestdruck) gerade erreicht. Aufgrund des entsprechend niedrigen Drucks in dem Versorgungsnetz werden die darin befindlichen Netzkomponenten geschont. Somit werden Leckageverluste minimiert.

Bevorzugt werden die d) bis f) im Betrieb des Versorgungsnetzes regelmäßig wiederholt. Dadurch kann der von der zumindest einen Pumpe erzeugte Druck bzw. der von dem zumindest einen Ventil gesteuerte Medienfluss an die im Betrieb auftretenden dynamischen Lastschwankungen angepasst werden, so dass schädliche Druckspitzen vermieden werden, was wiederum im Hinblick auf die Lebensdauer der Netzkomponenten vorteilhaft ist.

Das Bestimmen der Verbraucherprofile für jeden der Verbraucher kann entweder aufgrund tatsächlich bekannter Verbrauchswerte oder aufgrund einer typisierenden Betrachtung gegebenenfalls in Verbindung mit einem statistischen Ansatz erfolgen. Die tatsächlichen Verbrauchsprofile sind regelmäßig wegen des hohen technischen Aufwandes für die Messung und datenschutzrechtlicher Rahmenbedingungen nicht bekannt, so dass oftmals die typisierende Betrachtung zu bevorzugen sein wird. Die typisierende Betrachtung geht von einer Klassifizierung der Verbraucher in beispielsweise Bürogebäude, Schule, Wohngebäude oder Industriebetrieb aus und ordnet diesen jeweils ein Verbrauchsprofil zu.

Die die Druck- und/oder Durchflussprofile beschreibenden Daten werden beispielsweise berechnet, indem ein Simulationsmodell des tatsächlichen Versorgungsnetzes gebildet wird. In dem Simulationsmodell können beispielsweise Rohrleitungsquerschnitte, ein anliegender Druck, die bestimmten Verbrauchsprofile, d. h. die jeweiligen Abnahmen der Verbraucher, die bei der Rohrströmung auftretenden Reibungsverluste und weitere Faktoren berücksichtigt werden.

Unter einem Versorgungsnetz ist vorliegend ein Netz zu verstehen, in welchem ein Medium von zumindest einer Quelle oder von zumindest einem Zufluss zu mehreren Verbrauchern transportiert wird. Dabei kann das Medium ein Fluid, zum Beispiel Wasser oder Gas, sein. Das Versorgungsnetz kann auch nur ein Teil oder eine Zone eines größeren übergeordneten Versorgungsnetzes sein. Ein Versorgungsnetz kann vorliegend zum Beispiel ein Subnetz, eine PMZ oder ein Messbezirk (engl. District Metering Area, DMA) sein.

Unter einem Verbraucher ist vorliegend jeder Abnehmer zu verstehen, welcher in das Versorgungsnetz transportierte Medien abnimmt. Bei einem Wasserversorgungsnetz kann ein Verbraucher zum Beispiel ein Einfamilienhaus, ein Mehrfamilienhaus, ein Bürogebäude, ein Schulhaus, ein Industriebetrieb oder eine städtische Einrichtung sein. Entsprechendes gilt bei Fernwärmenetzen.

Unter einem Verbrauchsprofil ist vorliegend ein Profil zu verstehen, welches den Verbrauch eines jeweiligen Verbrauchers für einen vorgegebenen Zeitabschnitt kennzeichnet.

Unter Druckprofilen bzw. Durchflussprofilen sind vorliegend Profile zu verstehen, welche den zeitlichen Verlauf des Drucks in dem Versorgungsnetz, insbesondere an Knoten oder in Rohren bzw. Leitungen desselben bzw. den zeitlichen Verlauf des Durchflusses durch das Versorgungsnetz, insbesondere durch Knoten oder Rohre bzw. Leitungen desselben, angeben.

Mit "zweiter Stelle" ist eine von der "ersten Stelle" unterschiedliche Stelle in dem Versorgungsnetz gemeint.

Gemäß einer Ausführungsform werden in dem Schritt c) die Daten basierend auf einer Reihenentwicklung reduziert. Dies erlaubt es vorteilhaft, die Daten in einen kleineren mathematischen Raum zu transformieren, der eine einfachere Analyse derselben zulässt. Hierdurch kann der Schritt c) schnell und mit geringer Komplexität durch einen Prozessor ausgeführt werden.

Gemäß einer weiteren Ausführungsform werden die Daten basierend auf einem POD-Verfahren reduziert. POD steht für Proper Orthogonal Decomposition, was im Deutschen auch als Hauptkomponentenanalyse bezeichnet wird. Entsprechend werden die Daten durch Linearkombinationen einer geringen Anzahl aussagekräftiger Basisvektoren angenähert. Hierdurch kann der Schritt c) schnell und mit geringer Komplexität durch einen Prozessor ausgeführt werden.

Gemäß einer weiteren Ausführungsform umfasst der Schritt e) das Rekonstruieren des zumindest einen zweiten Druck-und/oder Durchflusswerts unter Verwendung eines Gappy-POD-Verfahrens. Dieses Verfahren wird beispielsweise in [KW] näher beschrieben. Das Gappy-POD-Verfahren benutzt eine POD-Basis, um von vorhandenen Daten zumindest eines Druck-und/oder Durchflusswerts auf die fehlenden Daten, wie beispielsweise zumindest einen zweiten Druck- und/oder Durchflusswert, rückzurechnen. Hierdurch kann der Schritt e) schnell und mit geringer Komplexität durch einen Prozessor ausgeführt werden.

Gemäß einer weiteren Ausführungsform werden zweite Druck-oder Durchflusswerte zu unterschiedlichen Zeitpunkten basierend auf demselben Reihenansatz M generiert. Mit anderen Worten ist der Reihenansatz M zeitunabhängig. Der Reihenansatz M kann also "offline" ermittelt werden, vgl. die Matrix M in [KW]. Die Rekonstruktion der Daten, hier beispielsweise der zweiten Druck- und/oder Durchflusswerte zu unterschiedlichen Zeitpunkten, erfordert schließlich nur die Koeffizienten der Reihenentwicklung für die aktuell im Versorgungsnetz erfassten bzw. gemessenen Druck- und/oder Durchflusswerte zu berechnen. Mit Hilfe der berechneten Koeffizienten lassen sich dann durch einfaches Aufsummieren einer geringen Anzahl von Reihengliedern die "fehlenden" Druck- und/oder Durchflusswerte berechnen. Hierdurch kann der Schritt c) schnell und mit geringer Komplexität durch einen Prozessor ausgeführt werden.

Gemäß einer weiteren Ausführungsform weist der Schritt a) folgende Schritte auf: Bestimmen eines Gesamtverbrauchs aller Verbraucher, Bestimmen eines Anteils eines jeweiligen Verbrauchers an dem Gesamtverbrauch, Zuweisen eines Verbrauchswerts von Null für den jeweiligen Verbraucher, Festlegen einer Menge Q des Mediums, welche kleiner ist als der bestimmte Gesamtverbrauch, Auswählen eines Verbrauchers, wobei eine Wahrscheinlichkeit, dass ein Verbraucher ausgewählt wird, seinem Anteil an dem Gesamtverbrauch entspricht, Erhöhen des Verbrauchswerts des ausgewählten Verbrauchers um die Menge Q, und Wiederholen der Schritte des Auswählens eines Verbrauchers und des Erhöhens des Verbrauchswerts solange die Summe der Verbrauchswerte aller Verbraucher kleiner als der bestimmte Gesamtverbrauch ist. Die Zeitspanne beträgt beispielsweise zwischen 1 und 3 Minuten. Die Menge Q kann bei einem Wasserversorgungsnetz zum Beispiel 3 Liter betragen. Indem die Menge Q auf diese Weise auf die einzelnen Verbraucher verteilt wird, kann deren Verbrauchsverhalten einfach simuliert werden. In Abhängigkeit von dem Verbrauchsverhalten bzw. den ermittelten Verbrauchsprofilen können dann die Druck- und/oder Durchflussprofile beschreibenden Daten für die Rohre und Knoten des Versorgungsnetzes einfach ermittelt werden.

Gemäß einer weiteren Ausführungsform umfasst der Schritt b) ein Bestimmen der die Druck- und/oder Durchflussprofile beschreibenden Daten, während ein jeweiliger Verbraucher die Menge des Mediums verbraucht. Für jede Zeitspanne ergibt sich aufgrund des Abflusses der Menge Q eine ganz bestimmte Situation hinsichtlich der Durchflüsse und Drücke in Knoten und Rohren des Versorgungsnetzes. Entsprechend ergibt sich pro Zeitspanne ein "Datenpunkt" umfassend einen Druck- und/oder Durchflusswert für eine jeweilige Stelle in dem Versorgungsnetz.

Gemäß einer weiteren Ausführungsform erfolgt das Berechnen der Druck- und/oder Durchflussprofile beschreibenden Daten für die jeweilige Zeitspanne nach dem Monte-Carlo-Verfahren. Durch das Monte-Carlo-Verfahren (auch Monte-Carlo-Simulation genannt) wird anhand einzelner statistischer Zufallsexperimente die Gesamtheit der auftretenden Druck- und/oder Durchflussprofile beschrieben. Entsprechend werden die Daten für eine jeweilige Zeitspanne mehrmals berechnet. Hierdurch wird die Qualität der Daten verbessert.

Gemäß einer weiteren Ausführungsform wird der zumindest eine erste Druck- und/oder Durchflusswert an der zumindest einen ersten Stelle im Versorgungsnetz mittels zumindest eines ersten Sensors erfasst, wobei die zumindest eine erste Stelle basierend auf dem POD-Verfahren, insbesondere dem Gappy-POD-Verfahren, ausgewählt wird. Dies ermöglicht eine für die Rekonstruktion der Daten, insbesondere des zumindest einen zweiten Druck- und/oder Durchflusswerts, optimierte Platzierung des ersten Sensors. Alternativ können auch bereits vorhandene bzw. installierte Sensoren zur Erfassung der Druck- bzw. Durchflusswerte, insbesondere des zumindest einen ersten Druck- und/oder Durchflusswerts, verwendet werden.

Gemäß einer weiteren Ausführungsform wird ein Minimaldruck aus dem zumindest einen ersten Druckwert und dem zumindest einen zweiten Druckwert ermittelt. Die zumindest eine Pumpe und/oder das zumindest eine Ventil wird in Abhängigkeit von der Differenz zwischen einem Sollwert und dem ermittelten Minimaldruck angesteuert. Der Drucksollwert entspricht beispielsweise einem gesetzlich vorgeschriebenen Mindestdruck. Entsprechend wird also die zumindest eine Pumpe und/oder das zumindest eine Ventil derart angesteuert, dass der Druck an keiner Stelle in dem Versorgungsnetz unterhalb dem Drucksollwert liegt. Gleichzeitig wird jedoch eine Steuerung derart angestrebt, dass der Minimaldruck im gesamten Versorgungsnetz gleich oder nur geringfügig oberhalb des Drucksollwerts liegt. Dadurch können die Netzkomponenten in dem Versorgungsnetz geschont werden.

Gemäß einer weiteren Ausführungsform beschreiben die Daten in dem Schritt b) Druck- und/oder Durchflussprofile in Knoten und/oder Rohren des Versorgungsnetzes.

Gemäß einer weiteren Ausführungsform ist das Versorgungsnetz ein Wasserversorgungsnetz.

Weiterhin wird eine Vorrichtung zur Druckregelung in einem Versorgungsnetz für eine Versorgung von Verbrauchern mit einem Medium bereitgestellt. Das Versorgungsnetz weist zumindest eine Pumpe zum Pumpen des Mediums und/oder zumindest ein Ventil zum Steuern eines Mediumflusses auf. Die Vorrichtung weist ferner auf: eine Bestimmungseinheit zum Bestimmen von zumindest einem Verbrauchsprofile für jeden der Verbraucher, eine Bestimmungseinheit zum Bestimmen von Druck- und/oder Durchflussprofile in dem Versorgungsnetzes beschreibenden Daten basierend auf den Verbrauchsprofilen, eine Reduzierungseinheit zum Reduzieren der Daten in reduzierte Daten, eine Erfassungseinheit zum Erfassen von zumindest einem ersten Druck- und/oder Durchflusswert an zumindest einer ersten Stelle in dem Versorgungsnetz, eine Rekonstruktionseinheit zum Rekonstruieren von zumindest einem zweiten Druck-und/oder Durchflusswert an zumindest einer zweiten Stelle in dem Versorgungsnetz aus den reduzierten Daten mittels des zumindest einen ersten Druck- und/oder Durchflusswerts und eine Ansteuereinheit zum Ansteuern der zumindest einen Pumpe und/oder des zumindest einen Ventils basierend auf dem zumindest einen ersten Druck- und/oder Durchflusswert und dem zumindest einen zweiten Druck- und/oder Durchflusswert.

Die jeweiligen Einheiten können ferner ausgebildet sein, Weiterbildungen des Verfahrens zu implementieren und auszuführen.

Eine jeweilige Einheit, beispielsweise die Bestimmungseinheiten, Reduzierungseinheit, Erfassungseinheit, Reduktionseinheit oder Ansteuereinheit, kann hardwaretechnisch und/oder auch softwaretechnisch implementiert sein. Bei einer hardwaretechnischen Implementierung kann die jeweilige Einheit als Vorrichtung oder als Teil einer Vorrichtung zum Beispiel als Computer oder als Mikroprozessor ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Weiterhin wird ein Versorgungsnetz zur Versorgung von Verbrauchern mit einem Medium bereitgestellt. Das Versorgungsnetz umfasst Knoten und/oder Rohre, zumindest eine Pumpe zum Pumpen des Mediums durch die Knoten und/oder Rohre und/oder zumindest ein Ventil zum Steuern eines Mediumflusses durch die Knoten und/oder Rohre, und zumindest eine Vorrichtung, wie vorstehend beschrieben, welche die zumindest eine Pumpe und/oder das zumindest eine Ventil ansteuert.

Die für das Verfahren beschriebenen Ausführungsformen und Merkmale gelten entsprechend für die Vorrichtung sowie das Versorgungsnetz.

Weitere mögliche Implementierungen der Erfindung umfassen auch nicht explizit genannte Kombinationen von zuvor oder im Folgenden bezüglich der Ausführungsbeispiele beschriebenen Merkmalen oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung von bevorzugten Ausführungsformen unter Bezugnahme auf die beigelegten Figuren näher erläutert.
- Fig. 1: zeigt ein Versorgungsnetz gemäß einer Ausführungsform der Erfindung;
- Fig. 2: zeigt ein Ablaufdiagramm einer Ausführungsform des erfindungsgemäßen Verfahrens;
- Fig. 3: zeigt ein Ablaufdiagramm einer weiteren Ausführungsform des erfindungsgemäßen Verfahrens;
- Fig. 4: zeigt einen Ausschnitt aus dem Versorgungsnetz gemäß Fig. 1 samt beispielhaften Verbrauchsprofilen gemäß einer Ausführungsform der vorliegenden Erfindung;
- Fig. 5: zeigt einen Ausschnitt aus dem Versorgungsnetz gemäß Fig. 1 samt Druck- und/oder Durchflussprofilen gemäß einer Ausführungsform der vorliegenden Erfindung; und
- Fig. 6: zeigt ein Diagramm eines Druckverlaufs gemäß einer Ausführungsform der vorliegenden Erfindung.

In den Figuren sind gleiche oder funktionsgleiche Elemente mit denselben Bezugszeichen versehen worden, sofern nichts anderes angegeben ist.

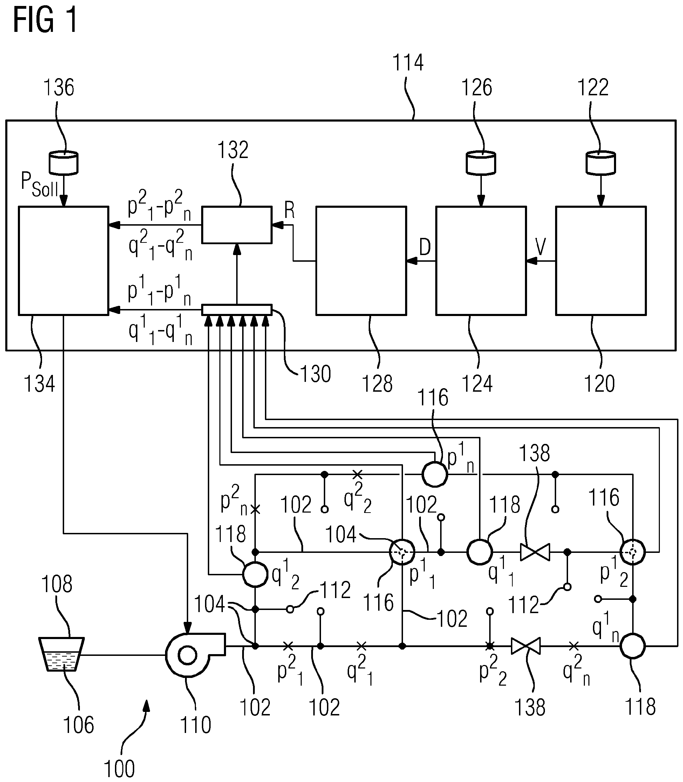

Fig. 1 zeigt ein Versorgungsnetz 100. Das gezeigte Versorgungsnetz 100 ist beispielsweise ein sogenanntes DMA (DMA - District Metering Area, d.h. Messbezirk) in einem größeren, übergeordneten Versorgungsnetz, welches im Übrigen nicht dargestellt ist.

Das Versorgungsnetz 100 ist beispielsweise ein Wasserversorgungsnetz und setzt sich aus Rohren bzw. Leitungen 102 zusammen, welche in Knoten 104 zusammenlaufen. Über die Rohre 102 und Knoten 104 wird Wasser 106 aus einem Speicher 108 mittels einer Pumpe 110 auf Verbraucher 112 verteilt. Zusätzlich zu der Pumpe 110 könnte auch ein nicht dargestelltes Ventil vorgesehen sein, welches einen Wasserfluss durch das Versorgungsnetz 100 steuert.

Ferner ist eine Vorrichtung 114 vorgesehen, welche die Pumpe 110, insbesondere einen elektrischen Motor derselben, ansteuert, um so einen Druck einzustellen, mit welchem die Pumpe 110 das Wasser beaufschlagt. Die Pumpe 110 bzw. deren Motor kann eine variable Drehzahl aufweisen, wobei die Drehzahl von der Vorrichtung 114 gesteuert wird. Die Vorrichtung 114 ist mit Drucksensoren 116 sowie Durchflusssensoren 118 des Versorgungsnetzes 100 signaltechnisch verbunden.

Die Vorrichtung 114 ist beispielsweise als Rechnereinrichtung, insbesondere Mikroprozessor ausgebildet. Die Vorrichtung 114 umfasst nachfolgend genannte Einheiten, welche hardware- und/oder softwaretechnisch auf dieser ausgebildet sein können. Weiterhin kann die Vorrichtung einen oder mehrere nachfolgend näher beschriebene Speicher aufweisen. Die Speicher können als getrennte Speichereinrichtungen vorgesehen sein. Alternativ können die Speicher als getrennte logische Speicher auf einer einzigen Speichereinrichtung vorgesehen sein.

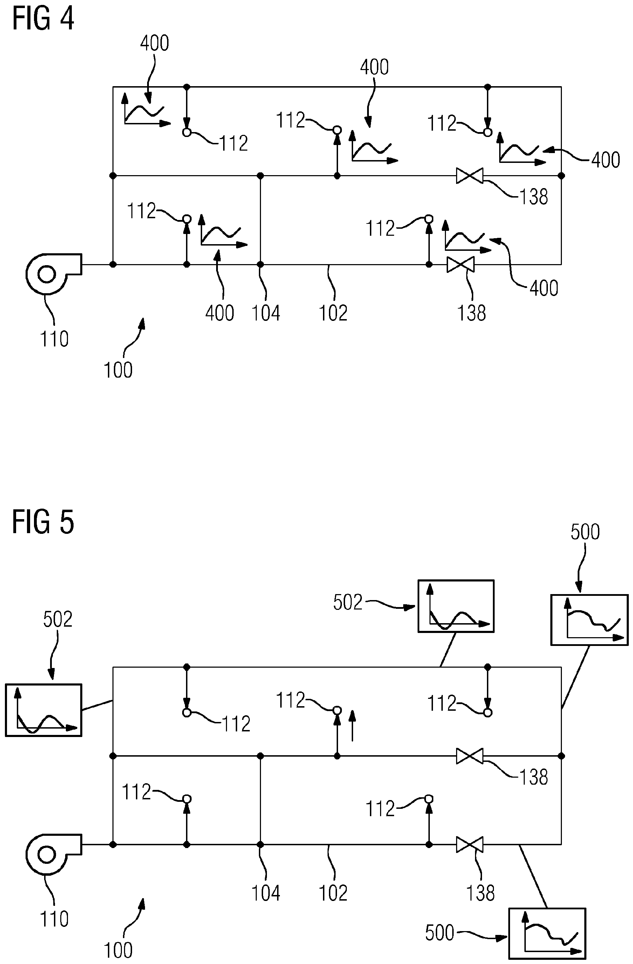

Zunächst umfasst die Vorrichtung 114 eine erste Bestimmungseinheit 120 zum Bestimmen von Verbrauchsprofilen für die Verbraucher 112. Fig. 4 zeigt beispielhaft Verbrauchsprofile 400 der Verbraucher 112. Das jeweilige Verbrauchsprofil 400 zeigt einen Verbrauch des Mediums über der Zeit. Fig. 4 zeigt dabei einen Ausschnitt aus Fig. 1 mit den Rohren bzw. Leitungen 102 und Verbrauchern 112. Die erste Bestimmungseinheit 120 kann mit einem Speicher 122 der Vorrichtung 114 verbunden sein. Auf dem Speicher 122 kann beispielsweise ein Gesamtverbrauch aller Verbraucher 112 gespeichert sein. Dieser Gesamtverbrauch ergibt sich beispielsweise aus einer entsprechenden Verbrauchsabrechnung der Stadtwerke und kann über eine Schnittstelle eingelesen oder von einem Benutzer eingegeben werden.

Weiterhin weist die Vorrichtung 114 eine zweite Bestimmungseinheit 124 auf, welche ebenfalls mit einem Speicher 126 verbunden sein kann. Die Bestimmungseinheit 124 bestimmt Druck-und/oder Durchflussprofile des Versorgungsnetzes 100 beschreibende Daten D basierend auf den von der ersten Bestimmungseinheit 120 bestimmten Verbrauchsprofilen 400 bzw. den entsprechend von der ersten Bestimmungseinheit 120 an die zweite Bestimmungseinheit 124 übergebenen Verbrauchsprofildaten V. Die Verbrauchsprofildaten V können sich von den Verbrauchsprofilen 400 dahingehend unterscheiden, dass diese beispielsweise weniger oder weniger komplexe Daten enthalten.

Fig. 5 zeigt einen Ausschnitt aus dem Versorgungsnetz 100 samt Leitungen 102 und Knoten 104 sowie beispielhafte Druckprofile 500 und Durchflussprofile 502, welche an beliebigen stellen in den Rohren 102 bzw. den Knoten 104 bestimmt werden. Ein jeweiliges Druckprofil 500 beschreibt beispielsweise einen Wasserdruck, welcher zwischen in etwa 3 und 7 bar liegt und als Funktion der Zeit variiert. Auf dem Speicher 126 können beispielsweise Informationen zur Länge der Rohre 102, zu Reibungsverlusten innerhalb der Rohre 102, zur Anzahl der Rohre 102 und Knotenpunkte 104 sowie deren Anordnung, der Topographie des Geländes bzw. des Versorgungsnetzes 102 usw. abgelegt sein. Aus diesen Daten bestimmt die Bestimmungseinheit 124 die die Druck- und/oder Durchflussprofile 500, 502 beschreibenden Daten D in Abhängigkeit von den Verbraucherprofilen 400.

Weiterhin weist die Vorrichtung 114 eine Reduzierungseinheit 128 auf. Die Reduzierungseinheit 128 reduziert die von der Bestimmungseinheit 124 bestimmten Daten D in reduzierte Daten R. Hierzu kann die Reduzierungseinheit 128 von einer Reihenentwicklung, insbesondere einem POD-Verfahren, Gebrauch machen.

Ferner weist die Vorrichtung 114 eine Erfassungseinrichtung 130 in Form einer Sensorschnittstelle auf. Die Sensorschnittstelle 130 ist mit den Druck- und Durchflusssensoren 116, 118 signaltechnisch verbunden. Die Drucksensoren 116 ermitteln dabei erste Druckwerte p¹₁-p¹ₙ, die Durchflusssensoren 118 erste Durchflusswerte q¹₁-q¹ₙ.

Eine Rekonstruktionseinheit 132 der Vorrichtung 114 rekonstruiert zweite Druck- und Durchflusswerte p²₁-p²ₙ, q²₁-q²ₙ an von den ersten Stellen unterschiedlichen zweiten Stellen. Die zweiten Stellen sind jeweils mit einem Kreuz in Fig. 1 angedeutet. Diese Rekonstruktion erfolgt auf Basis der von der Reduzierungseinheit 128 bereitgestellten reduzierten Daten unter Verwendung der ersten Druck- und Durchflusswerte p¹₁-p¹ₙ, q¹₁-q¹ₙ.

Schließlich steuert eine Ansteuereinheit 134 die Pumpe 110 basierend auf den ersten Druck- und/oder Durchflusswerten p¹₁-p¹ₙ, q¹₁-q¹ₙ sowie den zweiten Druck- und/oder Durchflusswerten p²₁-p²ₙ, q²₁-q²ₙ an. Weiterhin kann die Ansteuerung auf Basis eines auf einem Speicher 136 gespeicherten Drucksollwerts pₛₒₗₗ erfolgen. Bei dem Drucksollwert pₛₒₗₗ kann es sich um einen insbesondere gesetzlich vorgegebenen Mindestdruck handeln, welcher an keiner Stelle in dem Versorgungsnetz 100 unterschritten werden darf. Die Ansteuereinheit 134 steuert die Pumpe 110 entsprechend an.

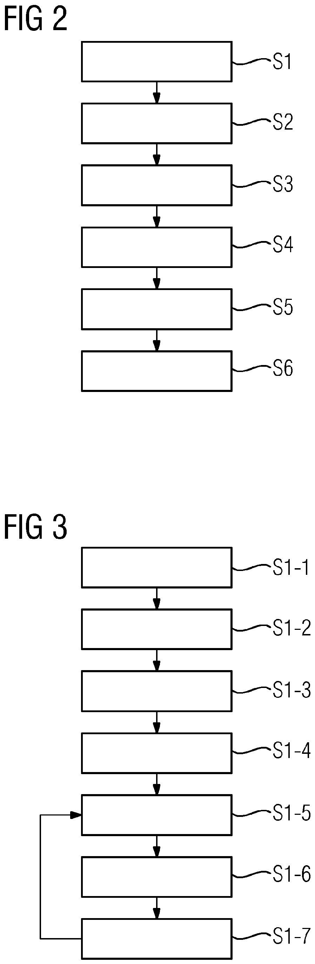

Fig. 2 zeigt ein Ablaufdiagramm eines Verfahrens gemäß einer Ausführungsform der Erfindung. Das Verfahren ist zur Druckregelung in dem Versorgungsnetz 100 geeignet und wird insbesondere auf der Vorrichtung 114 ausgeführt. Dabei werden nachfolgend noch weitere, nicht im Zusammenhang mit Fig. 1 erläuterte Ausführungsformen beschrieben, die gleichwohl auf der Vorrichtung 114 implementierbar sind.

In einem Schritt S1 werden die Verbrauchsprofile 400 für jeden der Verbraucher 112 bestimmt.

Dies kann beispielsweise in einem Verfahren geschehen, wie nachfolgend mit Bezug auf Fig. 3 näher erläutert.

Gemäß einem Schritt S1-1 wird ein Gesamtverbrauch aller Verbraucher 112 in dem Versorgungsnetz 100 bestimmt. Dieser Gesamtverbrauch kann beispielsweise berechnet werden, indem die Jahresendabrechnungen der jeweiligen Verbraucher aufsummiert und durch die Anzahl der Tage des Jahres geteilt werden.

In einem weiteren Schritt S1-2 wird der Anteil eines jeweiligen Verbrauchers 112 an dem Gesamtverbrauch bestimmt. Dieser Anteil kann beispielsweise dadurch berechnet werden, dass die Jahresendabrechnungen der jeweiligen Verbraucher 112 in ein Verhältnis zueinander gesetzt werden. Sowohl die Information über den Gesamtverbrauch wie auch die Information über den Anteil eines jeweiligen Verbrauchers 112 kann beispielsweise auf dem Speicher 122 gespeichert sein.

In einem weiteren Schritt S1-3 wird nun ein Wert von Null jedem der Verbraucher 112 zugewiesen. Insoweit handelt es sich um einen auf beispielsweise der Bestimmungseinheit 120 softwaretechnisch simulierten Verbraucher 112.

In einem Schritt S1-4 wird eine Menge Q des Mediums, hier Wasser, festgelegt, welche kleiner ist als der bestimmte Gesamtverbrauch. Insbesondere sollte die Menge Q deutlich kleiner sein als der bestimmte Gesamtverbrauch. Beispielsweise könnte die Menge Q gemäß dem vorliegenden Ausführungsbeispiel eines Wasserversorgungsnetzes 3 Liter betragen.

In einem Schritt S1-5 wird nun ein (virtueller) Verbraucher 112 ausgewählt. Die Auswahl erfolgt zufällig, wobei die Wahrscheinlichkeit, dass ein Verbraucher 112 ausgewählt wird, seinem Anteil an dem Gesamtverbrauch entspricht. Beträgt der Anteil eines Verbrauchers 112 am Gesamtverbrauch beispielsweise 10%, so beträgt die Wahrscheinlichkeit, dass dieser ausgewählt wird, ebenfalls 10%.

In der Folge nimmt der ausgewählte Verbraucher 112 über eine Zeitspanne t von beispielsweise 1 bis 3 Minuten die Menge Q aus dem Versorgungsnetz 100 ab, d.h. er verbraucht diese. In einem Schritt S1-6 wird daher ein Verbrauchswert des ausgewählten Verbrauchers 112 um die Menge Q erhöht.

In einem Schritt S1-7 wird die Summe der Verbrauchswerte aller Verbraucher 112 mit dem bestimmten Gesamtverbrauch verglichen. Ist diese Summer kleiner als der bestimmte Gesamtverbrauch, so werden die Schritte S1-5 bis S1-7 wiederholt.

Somit werden die in Fig. 4 gezeigten Verbrauchsprofile 400 für einen jeweiligen Verbraucher 112 generiert. Bei dem beschriebenen Ausführungsbeispiel wurde eine Klassifikation der Verbraucher 112 lediglich auf Basis ihres Anteils am Gesamtverbrauch vorgenommen. Dagegen kann die Klassifikation auch vorsehen, dass den Verbrauchern je nach Gebäudetyp, beispielsweise Einfamilienhaus, Mehrfamilienhaus, Reihenhaus, Bürogebäude, Schule, Städtische Einrichtung oder Fabrikgebäude ein bestimmtes Verbrauchsprofil zugewiesen wird.

Nun zurückkehrend zu Fig. 2 ist dort ein Schritt S2 gezeigt, welcher sich an den Schritt S1 anschließt. In dem Schritt S2 werden die Druck- und/oder Durchflussprofile 500, 502 bzw. die diese beschreibenden Daten bestimmt, wie in Fig. 5 gezeigt. In Kenntnis der Abflüsse (entsprechend den Verbrauchsprofilen 400) sowie potentieller Zuflüssen über die Pumpe 110 werden auf der Bestimmungseinheit 124 Berechnungen ausgeführt. Diese Berechnungen beziehen beispielsweise die Länge der Rohre 102, die Topologie des Versorgungsnetzes 100 und weitere insbesondere auf dem Speicher 126 gespeicherte Informationen mit ein. Die Druck- und Durchflusswerte werden an jeder Stelle in dem Versorgungsnetz 100 bzw. an geeignet vielen Stellen, um eine gewünschte hohe Auflösung zu erzielen, berechnet. Die Druck- und Durchflusswerte werden dabei für jede der im Zusammenhang mit dem Schritt S1-6 genannten Zeitspannen t berechnet. Das Berechnen der Druck- und Durchflussprofile beschreibenden Daten D kann für eine jeweilige Zeitspanne t im Sinne des Monte-Carlo-Verfahrens mehrfach erfolgen.

In dem Schritt S3 werden die Daten D bzw. die Simulationsdaten auf der Reduzierungseinheit 128 reduziert. Die Datenreduzierung kann insbesondere basierend auf einer Reihenentwicklung, insbesondere auf Basis eines POD-Verfahrens, erfolgen. Mit anderen Worten wird eine Kombination von wenigen Basisvektoren gefunden, welche die Daten D bzw. das Simulationsmodell ausreichend gut annähern. Das POD-Verfahren ist beispielsweise in [KW] beschrieben.

Bevor nun der Schritt S4 erfolgt, können die Druck- und Durchflusssensoren 116, 118 in dem Versorgungsnetz 100 basierend auf dem Gappy-POD-Verfahren, ebenfalls beschrieben von [KW], angeordnet werden. Dabei werden die Druck- und Durchflusssensoren 116, 118 in einem heuristischen Verfahren zunächst an den lokalen örtlichen Optima für die einzelnen POD-Moden platziert. Durch die Minimierung der Kondition (condition number) der Matrix M des Gappy-POD-Verfahrens kann die Platzierung der Druck- und Durchflusssensoren 116, 118 weiter verbessert werden. Alternativ können die Druck- und Durchflusssensoren 116, 118 auch, beispielsweise in dem Fall, dass diese bereits fest installiert sind - an beliebigen Positionen vorgesehen sein.

Die vorstehenden Schritte S1-S3 können "offline", insbesondere vor Inbetriebnahme des Versorgungsnetzes 100 durchgeführt werden.

In dem Schritt S4 werden nun die Druck- und Durchflusswerte p¹₁ - p¹ₙ, q¹₁ - q¹ₙ mittels der Druck- und Durchflusssensoren 116, 118 an den diesen jeweils zugeordneten Stellen erfasst.

In dem Schritt S5 werden die Druck- und Durchflusswerte p²₁ - p²ₙ, q²₁ - q²ₙ mit einer geeigneten Auflösung rekonstruiert bzw. hochgerechnet. Diese Rekonstruktions- bzw. Hochrechnung erfolgt auf der Rekonstruktionseinheit 132, wobei die reduzierten Daten R sowie die bereits gemessenen Druck- und Durchflusswerte p¹₁ - p¹ₙ, q¹₁ - q¹ₙ verwendet werden. Die Rekonstruktion erfolgt bevorzugt unter Verwendung eines Gappy-POD-Verfahrens, wie in [KW] beschrieben.

Das Gappy-POD-Verfahren umfasst die Ermittlung eines Reihenansatzes, bei [KW] als Matrix M bezeichnet. Auch die Matrix M kann insbesondere von der Reduzierungseinheit 132 "offline", das heißt insbesondere vor Inbetriebnahme des Versorgungsnetzes 500, erzeugt werden. Im "online"-Teil können dann die Koeffizienten, bei [KW] als bⁱ bezeichnet, der Reihenentwicklung für die aktuellen Druck- und Durchflusswerte p¹₁ - p¹ₙ, q¹₁ - q¹ₙ berechnet werden. Da sich die Positionen der Druck-und Durchflusssensoren 116, 118 im Betrieb nicht ändern, ändert sich auch der entsprechende Maskenvektor, bei [KW] bei n^{k} bezeichnet, nicht, so dass sich entsprechend auch der Reihenansatz M über die Zeit nicht ändert, also zeitunabhängig ist. Mithin beschränkt sich die Rekonstruktion der Druck- und Durchflusswerte p²₁ bis p²ₙ, q²₁ bis q²ₙ auf das Aufsummieren von einer geringen Anzahl von Reihengliedern. Entsprechend schnell können die Berechnungen erfolgen, so dass eine verzögerungsfreie Steuerung, insbesondere eine Echtzeitsteuerung, der Pumpe 110 möglich ist.

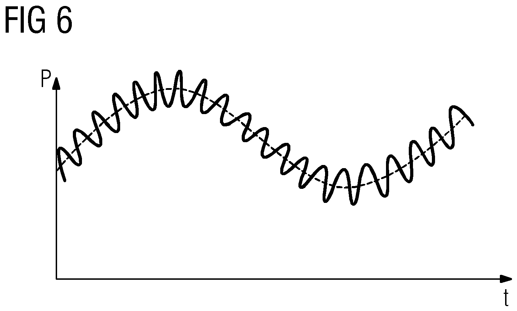

Anhand von Fig. 6 wird die durchgeführte Datenreduktion graphisch illustriert. Mittels Reihenansätzen werden die Datensätze approximiert, wobei jede Messreihe als "glatte Approximation" und eine hochfrequente kleine Störung dargestellt werden kann. Die reduzierten Daten R enthalten dann nur mehr die glatte Approximation.

In dem Schritt S5 wird die Pumpe 110 insbesondere mittels der Ansteuereinheit 134 angesteuert. Die Ansteuerung erfolgt auf Basis sämtlicher gemessener und berechneter Druck- und Durchflusswerte p¹₁ - p¹ₙ, q¹₁ - q¹ₙ, p²₁ - p²ₙ, q²₁ - q²ₙ.

Insbesondere kann folgendes Ansteuerverfahren vorgesehen sein: Die Ansteuereinheit 134 ermittelt aus sämtlichen Druckwerten p¹₁ - p¹ₙ, p²₁ - p²ₙ den Minimaldruck und vergleicht diesen mit dem Drucksollwert pₛₒₗₗ. Solange der ermittelte Minimaldruck über dem Drucksollwert pₛₒₗₗ liegt, reduziert sie den von der Pumpe 110 erzeugten Druck, beispielsweise durch eine entsprechende Ansteuerung des die Pumpe 110 antreibenden Elektromotors. Der Minimaldruck kann dadurch so eingestellt werden, dass er in einem möglichst kleinen Toleranzfenster um den Drucksollwert pₛₒₗₗ (bspw. Drucksollwert pₛₒₗₗ +/- 5%)liegt.

Anstelle oder zusätzlich zu der Pumpe 110 können ein oder mehrere (nicht gezeigte) Ventile 138 in dem Versorgungsnetz 100 angeordnet sein. Die Ventile 138 sind dazu eingerichtet, einen Druck und/oder eine Durchflussmenge in den Rohren 102 des Versorgungsnetzes 100 zu steuern. Die Ansteuereinheit 134 kann dazu eingerichtet sein, die Ventile 138 bzw. Stellmotoren derselben analog der Pumpe 110 anzusteuern. D.h., die Ventile 138 werden ebenfalls derart angesteuert, dass der ermittelte Minimaldruck in dem erwähnten Toleranzfenster liegt.

Obwohl die Erfindung vorliegend anhand konkreter Ausführungsbeispiele beschrieben wurde, ist sie nicht auf diese Ausführungsbeispiele beschränkt und kann auf verwandte Gebiete und Anwendungen übertragen werden. Daher ist sie vielfältig modifizierbar.
[TL]: Thornton, J., Lambert, A.: Progress in Practical Prediction of Pressure: Leakage, Pressure:Brust Frequency and Pressure:Consumption Relationships. Proceedings of IWA Special Conferences 'Leakage 2005', Halifax, Nova Scotia, Canada, September 12-14, 2005.
[UBRR]: Ulanicki, B., Bounds, P.L.M., Rance, J.P. Reynolds, L.: Open and closed loop pressure control for leakage reduction. Urban Water 2, 2000, Elsevier.
[KW]: Willcox, Karen: Unsteady Flow Sensing and Estimation via the Gappy Proper Orthogonal Decomposition. MIT, 2004.

## Patentansprüche

1. Verfahren zur Druckregelung in einem Versorgungsnetz (100) für eine Versorgung von Verbrauchern (112) mit einem Medium (106), wobei das Versorgungsnetz (100) zumindest eine Pumpe (110) zum Pumpen des Mediums und/oder zumindest ein Ventil (138) zum Steuern eines Mediumflusses aufweist, mit den Schritten:
a) Bestimmen (S1) von zumindest einem Verbrauchsprofil (400) für den jeweiligen Verbraucher (112),
b) Bestimmen (S2) von Druck- und/oder Durchflussprofile (500, 502) in dem Versorgungsnetz (100) beschreibenden Daten (D) basierend auf den Verbrauchsprofilen (400),
c) Reduzieren (S3) der Daten (D) in reduzierte Daten (R),
d) Erfassen (S4) von zumindest einem ersten Druck- und/oder Durchflusswert (p¹₁ - p¹ₙ, q¹₁ - q¹ₙ) an zumindest einer ersten Stelle in dem Versorgungsnetz (100),
e) Rekonstruieren (S5) von zumindest einem zweiten Druck-und/oder Durchflusswert (p²₁ - p²ₙ, q²₁ - q²ₙ) an zumindest einer zweiten Stelle in dem Versorgungsnetz (100) aus den reduzierten Daten (R) mittels des zumindest einen ersten Druck- und/oder Durchflusswerts (p¹₁ - p¹ₙ, q¹₁ - q¹ₙ), und
f) Ansteuern (S6) der zumindest einen Pumpe (110) und/oder des zumindest einen Ventils (138) basierend auf dem zumindest einen ersten Druck- und/oder Durchflusswert (p¹₁ - p¹ₙ, q¹₁ - q¹ₙ) und dem zumindest einen zweiten Druck-und/oder Durchflusswert (p²₁ - p²ₙ, q²₁ - q²ₙ).

2. Verfahren nach Anspruch 1,
**dadurch gekennzeichnet,**
**dass** in dem Schritt c) die Daten (D) basierend auf einer Reihenentwicklung reduziert werden.

3. Verfahren nach Anspruch 2,
**dadurch gekennzeichnet,**
**dass** die Daten (D) basierend auf einer Hauptkomponentenanalyse, auch als POD-Verfahren bzw. Proper Orthogonal Decomposition Verfahren bezeichnet, reduziert werden.

4. Verfahren nach einem der Ansprüche 1 bis 3,
**dadurch gekennzeichnet,**
**dass** der Schritt e) das Rekonstruieren des zumindest einen zweiten Druck- und/oder Durchflusswerts (p²₁ - p²ₙ, q²₁ - q²ₙ) unter Verwendung eines Gappy-POD-Verfahrens umfasst.

5. Verfahren nach Anspruch 4,
**dadurch gekennzeichnet,**
**dass** zweite Druck- oder Durchflusswerte (p²₁ - p²ₙ, q²₁ - q²ₙ) zu unterschiedlichen Zeitpunkten basierend auf demselben Reihenansatz (M) generiert werden.

6. Verfahren nach einem der Ansprüche 1 bis 5,
**dadurch gekennzeichnet,**
**dass** der Schritt a) folgende Schritte aufweist:
- Bestimmen (S1-1) eines Gesamtverbrauchs aller Verbraucher (112),
- Bestimmen (S1-2) eines Anteils eines jeweiligen Verbrauchers (112) an dem Gesamtverbrauch,
- Zuweisen (S1-3) eines Verbrauchswerts von Null für den jeweiligen Verbraucher (112),
- Festlegen (S1-4) einer Menge (Q) des Mediums (106), welche kleiner ist als der Gesamtverbrauch,
- Auswählen (S1-5) eines Verbrauchers (112), wobei eine Wahrscheinlichkeit, dass ein Verbraucher ausgewählt wird, seinem Anteil an dem Gesamtverbrauch entspricht,
- Erhöhen (S1-6) des Verbrauchswerts des ausgewählten Verbrauchers (112) um die Menge (Q), und
- Wiederholen (S1-7) der Schritte des Auswählen (S1-5) eines Verbrauchers (112) und des Erhöhens (S1-6) des Verbrauchswerts solange die Summe der Verbrauchswerte aller Verbraucher (112) kleiner als der Gesamtverbrauch ist.

7. Verfahren nach Anspruch 6,
**dadurch gekennzeichnet,**
**dass** der Schritt b) ein Bestimmen der die Druck- und/oder Durchflussprofile (500, 502) beschreibenden Daten (D), während ein jeweiliger Verbraucher (112) die Menge (Q) des Mediums verbraucht, umfasst.

8. Verfahren nach Anspruch 7,
**dadurch gekennzeichnet,**
**dass** das Berechnen der Druck- und/oder Durchflussprofile (500, 502) beschreibenden Daten nach dem Monte-Carlo-Verfahren erfolgt.

9. Verfahren nach einem der Ansprüche 1 bis 8,
**dadurch gekennzeichnet,**
**dass** der zumindest eine erste Druck- und/oder Durchflusswert (p¹₁ - p¹ₙ, q¹₁ - q¹ₙ) an der zumindest einen ersten Stelle in dem Versorgungsnetz (100) mittels zumindest eines ersten Sensors (116, 118) erfasst wird, wobei die zumindest eine erste Stelle basierend auf dem POD-Verfahren, insbesondere dem Gappy-POD-Verfahren, ausgewählt wird.

10. Verfahren nach einem der Ansprüche 1 bis 9,
**dadurch gekennzeichnet,**
**dass** ein Minimaldruck aus dem zumindest einen ersten Druckwert (p¹₁ - p¹ₙ) und dem zumindest einen zweiten Druckwert (p²₁ - p²ₙ) ermittelt wird und ferner die zumindest eine Pumpe (110) und/oder das zumindest eine Ventil (138) in Abhängigkeit von einer Differenz zwischen einem Drucksollwert (pₛₒₗₗ) und dem ermittelten Minimaldruck angesteuert wird.

11. Verfahren nach einem der Ansprüche 1 bis 10,
**dadurch gekennzeichnet,**
**dass** in dem Schritt b) die Daten (D) Druck- und/oder Durchflussprofile (500, 502) in Knoten (104) und/oder Rohren (102) des Versorgungsnetzes (100) beschreiben.

12. Verfahren nach einem der Ansprüche 1 bis 11,
**dadurch gekennzeichnet,**
**dass** das Versorgungsnetz (100) ein Wasserversorgungsnetz ist.

13. Vorrichtung (114) zur Druckregelung in einem Versorgungsnetz (100) für eine Versorgung von Verbrauchern (112) mit einem Medium (106), wobei das Versorgungsnetz (100) zumindest eine Pumpe (110) zum Pumpen des Mediums (106) und/oder zumindest einem Ventil (138) zum Steuern eines Mediumflusses aufweist, mit:
- einer Bestimmungseinheit (120) zum Bestimmen zumindest eines Verbrauchsprofils (400) für einen jeweiligen Verbraucher (112),
- einer Bestimmungseinheit (124) zum Bestimmen von Druck-und/oder Durchflussprofile (500, 502) in dem Versorgungsnetz (100) beschreibenden Daten (D) basierend auf den bestimmten Verbrauchsprofilen (400),
- einer Reduzierungseinheit (128) zum Reduzieren der Daten (D) in reduzierte Daten (R),
- einer Erfassungseinheit (130) zum Erfassen von zumindest einem ersten Druck- und/oder Durchflusswert (p¹₁ bis p¹ₙ, q¹₁ bis q¹ₙ) an zumindest einer ersten Stelle in dem Versorgungsnetz (100),
- einer Rekonstruktionseinheit (132) zum Rekonstruieren von zumindest einem zweiten Druck- und/oder Durchflusswert (p²₁ - p²ₙ, q²₁ - q²ₙ) an zumindest einer zweiten Stelle in dem Versorgungsnetz (100) aus den reduzierten Daten (R) mittels des zumindest einen ersten Druck- und/oder Durchflusswerts (p¹₁ - p¹ₙ, q¹₁ - q¹ₙ), und
- einer Ansteuereinheit (134) zum Ansteuern der zumindest einen Pumpe (110) und/oder des zumindest einen Ventils (138) basierend auf dem zumindest einen ersten Druck- und/oder Durchflusswert (p¹₁ - p¹ₙ, q¹₁ - q¹ₙ) und dem zumindest einen zweiten Druck- und/oder Durchflusswert (p²₁ - p²ₙ, q²₁ - q²ₙ).

14. Versorgungsnetz (100) zur Versorgung von Verbrauchern (112) mit einem Medium (106), mit:
- Knoten (104) und/oder Rohren (102),
- zumindest einer Pumpe (110) zum Pumpen des Mediums (106) durch die Knoten (104) und/oder Rohre (102) und/oder zumindest einem Ventil (138) zum Steuern eines Mediumflusses durch die Knoten (104) und/oder Rohre (102), und
- zumindest einer Vorrichtung (114) nach Anspruch 13, welche die zumindest eine Pumpe (110) und/oder das zumindest eine Ventil (138) ansteuert.

## Claims

1. Method for pressure control in a supply network (100) for supplying consumers (112) with a medium (106), wherein the supply network (100) has at least one pump (110) for pumping the medium and/or at least one valve (138) for controlling a medium flow, comprising the following steps:
a) determining (S1) at least one consumption profile (400) for the respective consumer (112),
b) determining (S2) data (D) describing pressure and/or flow profiles (500, 502) in the supply network (100) on the basis of the consumption profiles (400),
c) reducing (S3) the data (D) into reduced data (R),
d) detecting (S4) at least one first pressure and/or flow value (p¹₁-p¹ₙ, q¹₁-q¹ₙ) at at least one first point in the supply network (100),
e) reconstructing (S5) at least one second pressure and/or flow value (p²₁-p²ₙ, q²₁-q²ₙ) at at least one second point in the supply network (100) from the reduced data (R) by means of the at least one first pressure and/or flow value (p¹₁-p¹ₙ, q¹₁-q¹ₙ) , and
f) actuating (S6) the at least one pump (110) and/or the at least one valve (138) on the basis of the at least one first pressure and/or flow value (p¹₁-p¹ₙ, q¹₁-q¹ₙ) and the at least one second pressure and/or flow value (p²₁-p²ₙ, q²₁-q²ₙ).

2. Method according to Claim 1,
**characterized**
**in that** the data (D) are reduced in step c) on the basis of a series expansion.

3. Method according to Claim 2,
**characterized**
**in that** the data (D) are reduced on the basis of a principal component analysis, also referred to as a POD method or proper orthogonal decomposition method.

4. Method according to one of Claims 1 to 3,
**characterized**
**in that** step e) comprises the reconstruction of the at least one second pressure and/or flow value (p²₁-p²ₙ, q²₁-q²ₙ) using a gappy POD method.

5. Method according to Claim 4,
**characterized**
**in that** second pressure or flow values (p²₁-p²ₙ, q²₁-q²ₙ, are generated at different instants on the basis of the same series approach (M).

6. Method according to one of Claims 1 to 5,
**characterized**
**in that** step a) comprises the following steps:
- determining (S1-1) an overall consumption of all consumers (112),
- determining (S1-2) a share of the overall consumption for a respective consumer (112),
- assigning (S1-3) a consumption value of zero for the respective consumer (112),
- setting (S1-4) an amount (Q) of the medium (106) which is less than the overall consumption,
- selecting (S1-5) a consumer (112), with the probability of a consumer being selected corresponding to their share of the overall consumption,
- increasing (S1-6) the consumption value of the selected consumer (112) by the amount (Q), and
- repeating (S1-7) the steps of selecting (S1-5) a consumer (112) and increasing (S1-6) the consumption value for as long as the sum of the consumption values of all consumers (112) is less than the overall consumption.

7. Method according to Claim 6,
**characterized**
**in that** step b) comprises a determination of the data (D) describing the pressure and/or flow profiles (500, 502) while a respective consumer (112) consumes the amount (Q) of the medium.

8. Method according to Claim 7,
**characterized**
**in that** the data describing pressure and/or flow profiles (500, 502) are calculated according to the Monte Carlo method.

9. Method according to one of Claims 1 to 8,
**characterized**
**in that** the at least one first pressure and/or flow value (p¹₁-p¹ₙ, q¹₁-q¹ₙ) at the at least one first point in the supply network (100) is registered by means of at least one first sensor (116, 118), wherein the at least one first point is selected on the basis of the POD method, in particular the gappy POD method.

10. Method according to one of Claims 1 to 9,
**characterized**
**in that** a minimum pressure is established from the at least one first pressure value (p¹₁-p¹ₙ) and the at least one second pressure value (p²₁-p²ₙ) and, furthermore, the at least one pump (110) and/or the at least one valve (138) is/are actuated in a manner dependent on the difference between an intended pressure value (p_{intended}) and the established minimum pressure.

11. Method according to one of Claims 1 to 10,
**characterized**
**in that** the data (D) in step b) describe pressure and/or flow profiles (500, 502) at nodes (104) and/or in pipes (102) of the supply network (100).

12. Method according to one of Claims 1 to 11,
**characterized**
**in that** the supply network (100) is a water supply network.

13. Device (114) for pressure control in a supply network (100) for supplying consumers (112) with a medium (106), wherein the supply network (100) has at least one pump (110) for pumping the medium (106) and/or at least one valve (138) for controlling a medium flow, comprising:
- a determination unit (120) for determining at least one consumption profile (400) for a respective consumer (112),
- a determination unit (124) for determining data (D) describing pressure and/or flow profiles (500, 502) in the supply network (100) on the basis of the determined consumption profiles (400),
- a reduction unit (128) for reducing the data (D) into reduced data (R),
- a detection unit (130) for detecting at least one first pressure and/or flow value (p¹₁ to p¹ₙ, q¹₁ to q¹ₙ) at at least one first point in the supply network (100),
- a reconstruction unit (132) for reconstructing at least one second pressure and/or flow value (p²₁-p²ₙ, q²₁-q²ₙ) at at least one second point in the supply network (100) from the reduced data (R) by means of the at least one first pressure and/or flow value (p¹₁-p¹ₙ, q¹₁-q¹ₙ) , and
- an actuation unit (134) for actuating the at least one pump (110) and/or the at least one valve (138) on the basis of the at least one first pressure and/or flow value (p¹₁-p¹ₙ, q¹₁-q¹ₙ) and the at least one second pressure and/or flow value (p²₁-p²ₙ, q²₁-q²ₙ) .

14. Supply network (100) for supplying consumers (112) with a medium (106), comprising:
- nodes (104) and/or pipes (102),
- at least one pump (110) for pumping the medium (106) through the nodes (104) and/or pipes (102) and/or at least one valve (138) for controlling a medium flow through the nodes (104) and/or pipes (102), and
- at least one device (114) according to Claim 13, which actuates the at least one pump (110) and/or the at least one valve (138).

## Revendications

1. Procédé de régulation de pression dans un réseau d'approvisionnement (100) destiné à un approvisionnement de consommateurs (112) avec un fluide (106), dans lequel le réseau d'approvisionnement (100) présente au moins une pompe (110) destinée au pompage du fluide et/ou au moins une vanne (138) destinée à la commande d'un flux de fluide, comprenant les étapes consistant à :
a) définir (S1) au moins un profil de consommation (400) pour le consommateur (112) respectif,
b) définir (S2) des données (D) décrivant des profils de pression et/ou de débit (500, 502) au sein du réseau d'approvisionnement (100) en se basant sur les profils de consommation (400),
c) réduire (S3) les données (D) pour obtenir des données réduites (R),
d) enregistrer (S4) au moins une première valeur de pression et/ou de débit (p¹₁ à p¹ₙ, q¹₁ à q¹ₙ) au niveau d'au moins un premier emplacement au sein du réseau d'approvisionnement (100),
e) reconstruire (S5) au moins une deuxième valeur de pression et/ou de débit (p²₁ à p²ₙ, q²₁ à q²ₙ) au niveau d'au moins un deuxième emplacement au sein du réseau d'approvisionnement (100) à partir des données réduites (R) au moyen de la au moins une première valeur de pression et/ou de débit (p¹₁ à p¹ₙ, q¹₁ à q¹ₙ) , et
f) commander (S6) la au moins une pompe (110) et/ou la au moins une vanne (138) en se basant sur la au moins une première valeur de pression et/ou de débit (p¹₁ à p¹ₙ, q¹₁ à q¹ₙ) et sur la au moins une deuxième valeur de pression et/ou de débit (p²₁ à p²ₙ, q²₁ à q²ₙ) .

2. Procédé selon la revendication 1,
**caractérisé en ce que**
à l'étape c), les données (D) sont réduites en se basant sur un développement en série.

3. Procédé selon la revendication 2,
**caractérisé en ce que**,
les données (D) sont réduites en se basant sur une analyse en composantes principales, également appelée approche POD resp. méthode de décomposition orthogonale aux valeurs propres.

4. Procédé selon l'une quelconque des revendications 1 à 3,
**caractérisé en ce que**,
l'étape e) comprend la reconstruction de la au moins une deuxième valeur de pression et/ou de débit (p²₁ à p²ₙ, q²₁ à q²ₙ) à l'aide d'une approche Gappy-POD.

5. Procédé selon la revendication 4,
**caractérisé en ce que**,
des deuxièmes valeurs de pression ou de débit (p²₁ à p²ₙ, q²₁ à q²ₙ) sont générées pour des points temporels différents en se basant sur la même mise en équation en série (M).

6. Procédé selon l'une quelconque des revendications 1 à 5,
**caractérisé en ce que**,
l'étape a) présente les étapes ci-dessous consistant à :
- définir (S1-1) une consommation totale de tous les consommateurs (112),
- définir (S1-2) une part d'un consommateur (112) respectif dans la consommation totale,
- affecter (S1-3) une valeur de consommation de zéro au consommateur (112) respectif,
- déterminer (S1-4) une quantité (Q) du fluide (106), qui est inférieure à la consommation totale,
- choisir (S1-5) un consommateur (112), dans lequel une probabilité qu'un consommateur soit choisi correspond à sa part dans la consommation totale,
- augmenter (S1-6) la valeur de consommation du consommateur (112) choisi à concurrence de la quantité (Q), et
- répéter (S1-7) les étapes du choix (S1-5) d'un consommateur (112) et de l'augmentation (S1-6) de la valeur de consommation aussi longtemps que la somme des valeurs de consommation de tous les consommateurs (112) est inférieure à la consommation totale.

7. Procédé selon la revendication 6,
**caractérisé en ce que**,
l'étape b) comprend une définition des données (D) décrivant les profils de pression et/ou de débit (500, 502), pendant qu'un consommateur (112) respectif consomme la quantité (Q) du fluide.

8. Procédé selon la revendication 7,
**caractérisé en ce que**,
le calcul des données décrivant des profils de pression et/ou de débit (500, 502) a lieu selon la méthode de Monte Carlo.

9. Procédé selon l'une quelconque des revendications 1 à 8,
**caractérisé en ce que**,
la au moins une première valeur de pression et/ou de débit (p¹₁ à p¹ₙ, q¹₁ à q¹ₙ) est enregistrée au niveau du au moins un premier emplacement au sein du réseau d'approvisionnement (100) au moyen d'au moins un premier capteur (116, 118), dans lequel le au moins un premier emplacement est choisi en se basant sur l'approche POD, en particulier l'approche Gappy-POD.

10. Procédé selon l'une quelconque des revendications 1 à 9,
**caractérisé en ce que**,
une pression minimale est déterminée à partir de la au moins une première valeur de pression (p¹₁ à p¹ₙ) et de la au moins une deuxième valeur de pression (p²₁ à p²ₙ) et la au moins une pompe (110) et/ou la au moins une vanne (138) est/sont en outre commandée(s) en fonction d'une différence entre une valeur de pression de consigne (Pₛₒₗₗ₎ et la pression minimale déterminée.

11. Procédé selon l'une quelconque des revendications 1 à 10,
**caractérisé en ce que**,
à l'étape b), les données (D) décrivent des profils de pression et/ou de débit (500, 502) au sein de noeuds (104) et/ou de conduites (102) du réseau d'approvisionnement (100).

12. Procédé selon l'une quelconque des revendications 1 à 11,
**caractérisé en ce que**,
le réseau d'approvisionnement (100) est un réseau d'approvisionnement en eau.

13. Dispositif (114) de réglage de pression dans un réseau d'approvisionnement (100) destiné à un approvisionnement de consommateurs (112) avec un fluide (106), dans lequel le réseau d'approvisionnement (100) présente au moins une pompe (110) destinée au pompage du fluide (106) et/ou au moins une vanne (138) destinée à la commande d'un flux de fluide, avec :
- une unité de définition (120) destinée à définir au moins un profil de consommation (400) pour un consommateur (112) respectif,
- une unité de définition (124) destinée à définir des données (D) décrivant des profils de pression et/ou de débit (500, 502) au sein du réseau d'approvisionnement (100) en se basant sur les profils de consommation (400) définis,
- une unité de réduction (128) destinée à réduire les données (D) afin d'obtenir des données réduites (R),
- une unité d'enregistrement (130) destinée à enregistrer au moins une première valeur de pression et/ou de débit (p¹₁ à p¹ₙ, q¹₁ à q¹ₙ) au niveau d'au moins un premier emplacement au sein du réseau d'approvisionnement (100),
- une unité de reconstruction (132) destinée à reconstruire au moins une deuxième valeur de pression et/ou de débit (p²₁ à p²ₙ, q²₁ à q²ₙ) au niveau d'au moins un deuxième emplacement au sein du réseau d'approvisionnement (100) à partir des données réduites (R) au moyen de la au moins une première valeur de pression et/ou de débit (p¹₁ à p¹ₙ, q¹₁ à q¹ₙ), et
- une unité de commande (134) destinée à commander la au moins une pompe (110) et/ou la au moins une vanne (138) en se basant sur la au moins une première valeur de pression et/ou de débit (p¹₁ à p¹ₙ, q¹₁ à q¹ₙ) et sur la au moins une deuxième valeur de pression et/ou de débit (p²₁ à p²ₙ, q²₁ à q²ₙ) .

14. Réseau d'approvisionnement (100) destiné à approvisionner des consommateurs (112) avec un fluide (106), comprenant :
- des noeuds (104) et/ou des conduites (102),
- au moins une pompe (110) destinée au pompage du fluide (106) à travers les noeuds (104) et/ou les conduites (102) et/ou au moins une vanne (138) destinée à commander un flux de fluide à travers les noeuds (104) et/ou les conduites (102), et
- au moins un dispositif (114) selon la revendication 13, qui commande la au moins une pompe (110) et/ou la au moins une vanne (138).
